(19) **Europäisches Patentamt / European Patent Office / Office européen des brevets**

(11) **EP 1 423 983 B1**

(12) **EUROPEAN PATENT SPECIFICATION**

(45) Date of publication and mention
of the grant of the patent:
**22.09.2010 Bulletin 2010/38**

(51) Int Cl.:
***H04W 68/00*** (2009.01)

(21) Application number: **02747290.1**

(86) International application number:
**PCT/EP2002/004428**

(22) Date of filing: **22.04.2002**

(87) International publication number:
**WO 2003/021996 (13.03.2003 Gazette 2003/11)**

(54) **PAGING AREA OPTIMISATION IN A CELLULAR COMMUNICATIONS NETWORK**

FUNKRUFBEZIRKSOPTIMIERUNG IN EINEM ZELLULAREN KOMMUNIKATIONSNETZ

OPTIMISATION DE LA ZONE D'APPEL DANS UN RESEAU DE COMMUNICATIONS CELLULAIRE

(84) Designated Contracting States:
**AT BE CH CY DE DK ES FI FR GR IE IT LI LU MC NL PT SE TR**

(30) Priority: **29.08.2001 GB 0121000**

(43) Date of publication of application:
**02.06.2004 Bulletin 2004/23**

(73) Proprietor: **MOTOROLA, INC.**
**Schaumburg, IL 60196 (US)**

(72) Inventor: **HOPKINSON, Jonathan**
**Corsham,**
**Wiltshire SN13 0DD (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
**WO-A-01/45450      US-A- 6 138 025**

**Description**

This invention relates to a method and apparatus for assigning cells to paging areas in a cellular communications network. The invention has applicability to cellular communications networks in general and particularly to the GSM (Global System for Mobile Communications) and to third generation systems such as UMTS (Universal Mobile Telecommunication System) currently under standardization.

Cellular communications networks generally include a mobile services switching centre (MSC) coupled to a public switched telephone network (PSTN), a plurality of base stations (BS) and radio telephone subscriber units often referred to as mobile stations. Usually, several base stations are under the control of a base station controller (BSC) which in turn communicates directly by land-line or microwave link with an MSC. Several base station controllers may report to one MSC. An operations and maintenance centre (OMC) is connected to the MSC and comprises a centralized facility which supports the day-to-day management of the cellular network. It also facilitates network engineering and planning.

Each of the plurality of base stations generally defines a geographic region or cell proximate to each base station to produce coverage areas. The coverage area of any given cell may partially overlap with that of one or more of its neighbours. Cell sizes range typically from 200 metres in diameter in urban areas to 120 kilometres in rural areas. Each base station comprises the radio frequency components and the antenna for communicating with the mobile stations. The communication link from a base station to a mobile station is called the downlink. Conversely, the communication link from the mobile station to the base station is called the uplink.

By means of the aforementioned components, the cellular network is able to (amongst other things) monitor the number of calls made by a mobile station, control the handover of the communications link from the mobile station to the base stations as it moves from cell to another and track the mobile station's location within the network by means of a location update sequence. In the GSM system, for example, each mobile station, when active in a call, measures the downlink signal quality i.e. the bit error rate, and the downlink signal strength of a signal received from its serving base station in whose cell it currently resides, and also the downlink signal strength from neighbouring base stations serving neighbouring cells. All these measurements are periodically reported back to the serving base station and thereon as necessary, to the OMC via the BSC and MSC. These measurements are reported in messages known as "Measurement Reports" in GSM terminology.

As the mobile station moves from one cell to the next, the communication link is transferred from its serving base station to a neighbouring base station using a procedure known as handover, as mentioned above. The need for a handover is usually determined on the basis of one or more criteria. One of the most commonly used criteria in a GSM system is the received signal strength, the so-called RxLev, measured by the mobile station. When the RxLev values of the serving base station and a neighbouring base station meet some pre-determined criteria, a handover is triggered. Some hysteresis is designed into the handover algorithm so that "ping-ponging" between cells is avoided. As a consequence, there may be instances where a mobile station at a cell border (where there is some overlap in coverage between two cells), receives a RxLev of a neighbouring cell which is higher than that of its serving cell.

Within a typical cellular system design, the network is divided into separate, contiguous paging areas, known as location areas within GSM. Each location area comprises a multiplicity of adjacent cells. Whenever a mobile station passes from one paging area to another, it informs the network of its new location area by means of a location update message, once it has received the identity of its current location area via the downlink broadcast channel. The network keeps a record of this information so that if the mobile station needs to be paged, (i.e. so that it may receive an incoming call), paging messages are only sent to those cells within the specific paging area. This avoids the wasteful exercise of paging every cell across the entire network.

There are some trade-offs to be considered when designing a paging area. A large paging area means that a large number of paging messages have to be sent to each cell thereby increasing the required paging load of each cell. However, the smaller the paging area, the more frequently the mobile station will cross paging area boundaries, which will require the mobile station to update the network as to its location, thereby increasing the load on the signalling channels. A further negative side effect of small paging areas is that the hysteresis which has to be implemented at each border, can lead to the mobile station being served by a non-optimum cell, thereby increasing the risk of poor quality calls and even call failures. In addition, sensible placement of paging area boundaries can minimise the flow of mobile stations from one paging area to another, thereby reducing the network signalling load and hysteresis affects.

An example of a paging approach for a cellular communication system is discloses in US-A-6 138 025 which discusses grouping cells into Virtual Mobile Location Areas (VMLA) for equalizing the paging load, wherein boundaries of each VMLA are dynamically moved to balance paging load within each VMLA."

Currently, paging area planning is a manual, labour-intensive exercise based upon limited data backed up by un-validated assumptions. The resulting plans are non-optimum leading to an increase in network signalling load and therefore reducing network capacity and quality of service.

Thus, there is a need for an automated process for determining paging areas which can deliver an optimum solution, minimise network signalling load and maximise call set-up performance. An automatic process will also reduce a network operator's costs by reducing the need for skilled staff.

In a first aspect, the invention comprises a method of grouping cells in a cellular communications network into a common paging area, including the steps of;

analysing communications traffic within said cells,

from said analysis, associating penalty values reflecting the penalty of particular cell pairs being grouped into the same paging area,

and assigning cells to common paging areas so as to mimimise a sum of the penalty values.

In a second aspect, the invention comprises apparatus for grouping cells in a cellular communications network into a common paging area, including;

means for analysing communications traffic within said cells,

means for associating, from said analysis, penalty values reflecting the penalty of particular cell pairs being grouped into the same paging area,

and means for assigning cells to common paging areas so as to mimimise a sum of the penalty values.

Such apparatus may comprise part of an operations and maintenance centre.

The invention further provides a computer program product comprising a medium on which or in which is recorded a program which, when executed in a computer system, will perform any of the methods for grouping cells in a cellular communications network as recited herein.

The step of analysing may comprise measuring a paging signal load in a cell. The penalty value for a particular cell pair may then be derived from a value for paging load in one of the cells comprising the pair.

In one embodiment, the penalty value may be refined by modifying the paging load value by a figure relating to the degree of coverage overlap between the pair of cells. The degree of coverage overlap may be determined by analysing measurement reports received from mobile stations located within the communications network. Such measurement reports may relate to received signal strength measurements from a mobile station's serving base station and from base stations serving neighbouring cells.

In a preferred embodiment, a maximum paging load value is assigned for the common paging area and the assigning step is modified to ensure that this maximum is not exceeded.

Minimisation of the total penalty value may be accomplished by employing one of any suitable algorithms. Such algorithms are known to those skilled in the art and operate by searching for an optimum setting of multiple input variables. Simulated annealing is one such technique that may be employed in the minimisation process.

The concept of a penalty value (and a penalty matrix) being derived from measurement reports, is well known in the cellular communications field in regard to automatic frequency planning; see for example the Applicant's co-pending Patent Application GB-A-2356320.

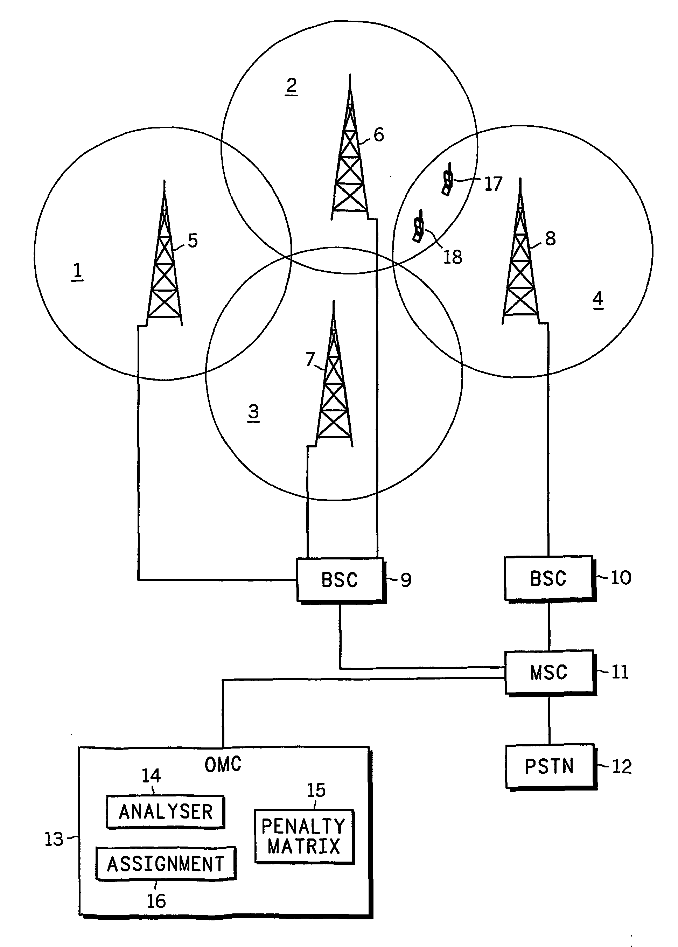

An embodiment of the invention will now be described, by way of example only, with reference to the drawing which is a schematic diagram of components included in a cellular communications network and adapted to operate in accordance with the invention.

A part of a cellular communications network, as shown in the drawing, comprises a set C of cells 1,2, 3, 4, each served by an associated base station 5, 6, 7, 8 respectively. Each cell may be considered as a server cell S surrounded by one or more neighbour cells N in the subsequent analysis. Initially, cells 1, 2, 3 are assigned to the same location area and their respective base stations 5, 6, 7 are connected to a first base station controller 9. The remaining cell 4 is assigned initially to a separate location area and its base station 8 is connected to a second BSC 10. Both base station controllers 9 and 10 are connected to an MSC 11 which in turn, is linked to a PSTN 12 and an OMC 13. The OMC 13 includes a measurement analysis module 14, a penalty matrix module 15 and a location area assignment module 16.

The cells 1, 2, 3, 4 are populated by mobile stations which are free to move within the cellular network comprising cells 1, 2, 3, 4 and also outside it into other regions (not shown). For the sake of clarity, only two mobile stations 17, 18 are shown in the drawing and are located in the overlapping regions of cells 2 and 4.

In addition to the modules 14, 15, 16 included in the OMC 13 and mentioned above, the components shown in the drawing all include the conventional hardware and software necessary for facilitating telecommunications and managing the operation of cellular network. Specifically, the mobile stations 17, 18 are capable of sending measurement reports back to their serving base station 6, say. Such reports may include signal strength (RxLev) and signal quality measurements of signals received from their serving base station 6 and from base stations serving neighbouring cells 3, 4 say.

The mobile stations are also configured to transmit location update messages when moving across a location area boundary (e.g. between cells 2 and 4 or when moving out of or into the set of cells C illustrated).

The OMC 13 is configured to monitor measurement reports and location updates. It is also configured to measure the number of paging messages made per unit time in any cell. For example, if a call comes in for the mobile station 17, the OMC 13 will already be aware that the mobile station 17 is in the location area including cells 1,2 and 3 because the mobile station 17 will have previously transmitted a location update message. Hence, a paging message will be sent out from base stations 5, 6, 7 serving cells 1, 2 and 3. When the mobile station 17 responds to the base station 6, it will then be evident to OMC 13 that the mobile station 17 is in cell 2. Therefore, the OMC 13 can monitor a paging load for any particular cell.

A method for determining an optimum location area (or paging area) boundary will now be described.

In general, the analyser module 14 in the OMC 13 receives measurement reports generated by the components in the network. It processes the measurements and passes on relevant data to the penalty matrix module 15. This in turn, generates a penalty matrix of penalty values and subsequently performs a minimisation process thereon. The results of the minimisation process are passed on to the assignment module 16 which configures the optimised paging area boundaries by notifying the MSC 11, BSC's 9, 10 and the base stations 5, 6, 7, 8 as appropriate.

In the specific example shown in the drawing, the OMC 13 decides whether or not to include cell 4 in the same location area as cell 1, 2 and 3. If the paging load of cell 4 is comparatively heavy, then inclusion of cell 4 is not an attractive proposition because it could mean that the maximum pre-set paging load for the location area as a whole would be exceeded. However, the disadvantageous factor of paging load could be offset by the degree of coverage overlap between cell 4 and the other cells in the location area under consideration. For instance, the drawing shows cell 4 overlapping with cells 2 and 3. If there is a preponderance of mobile stations within these overlapping regions, then it makes sense to include cell 4 in the same location area because this would greatly reduce the location area update signalling overhead. The invention provides a means for identifying such areas of coverage overlap by analysing measurement reports.

The invention according to a preferred embodiment operates to configure location areas so that cells having high coverage overlap are assigned to the same location area. A matrix of penalty values is created which reflects the penalty of a particular cell pair being assigned to the same location area.

A specific example, relevant to GSM technology, of how such a penalty value p(S,N) between a serving cell S and a neighbouring cell N can be determined is provided in the following equation:-

$$p(S,N) = P(N) - R \times \sum_{MR(S)} F(Mr)$$

where
P(N) is the paging load of neighbour N per unit time and obtained from the OMC 13.
MR(S) is the set of all measurement reports, Mr, from cell S
F(Mr) =1 if Rxlev(N) > Rxlev(S) and N is the strongest neighbour in Mr
Else F(Mr) = 0
R is the ratio of total location update traffic to total cell coverage overlap such that

$$R = \frac{8 * Loc\_Up\_Vol}{\sum_{C} \sum_{MR(S)} G(Mr)}$$

where
Loc_Up_Vol is the existing volume of location update transactions per unit time in the network area being planned. This value may be easily obtained from the network OMC.
C is the set of all cells S in the network are being planned.
G(Mr) = 1 if for N, which is the strongest neighbour reported in Mr, Rxlev(N) > Rxlev(S) AND N is currently in a different location area in the existing plan
Else G(Mr) = 0

The factor of 8 is used because a location update transaction requires approximately 8 times more signalling load than a paging message. This may vary based upon individual network settings, but is easily determined by known procedures

The above analysis gives an array of penalty values, some possibly negative, for each server-neighbour relationship.

A simplified example matrix for 4 cells A-D which might be generated by the equation above, is shown below:

|   | Page Load | A | B | C | D |
|---|---|---|---|---|---|
| A | 15 |   | 10 | -20 | -5 |
| B | 20 | 20 |   | -15 | 10 |
| C | 10 | -10 | -5 |   | -15 |
| D | 5 | -15 | 5 | -5 |   |

With reference to this matrix, a minimisation technique which will be well-known to those skilled in the art, can then be used to allocate cells to location areas in order to minimise the total penalty value. For example, allocating cells A and C to the same location area (combined penalty value of -30) is more beneficial than making A and D share location areas (with a combined penalty value of -20).

Sometimes the optimum solution may be to have a single location area for the entire target network. However, for link and radio channel dimensioning reasons, there will be a maximum paging load which can be supported within any given location area. For this case, an additional constraint is preferably added to the minimisation process. As each cell is added to a location area, the total paging load must be determined by adding the corresponding value from the page load column in the table above, and the total page load for any give location area should not exceed a specified maximum. The optimum solution will then be a plan employing the minimum number of distinct paging areas without any paging area violating the constraint of total page load.

Although the above example is specific to GSM, the invention is equally applicable to code division multiple access systems and to UMTS where, for example, the pilot strength measurement message or the UMTS measurement report message can be used to obtain the relative strengths of server and neighbouring cells.

**Claims**

1.    A method of grouping cells in a cellular communications network into a common paging area, including the steps of; analyzing (14) communications traffic within said cells (1, 2, 3, 4),
     from said analysis, associating penalty values (15) reflecting the penalty of particular cell pairs (2, 4) being grouped into the same paging area, and
     assigning (16) cells to common paging areas so as to mimimise a sum of the penalty values.

2.    A method according to Claim 1 wherein the step of analysing (14) comprises measuring a paging signal load in a cell.

3.    A method according to Claim 2 wherein the step of analysing (14) further comprises determining a degree of coverage overlap between said cell pairs.

4.    A method according to Claim 3 wherein the degree of overlap is determined from measurement reports received from mobile stations located within the network.

5.    A method according to Claim 4 wherein the measurement reports comprise signal strength measurements of signals received by mobile stations from base stations serving said cells.

6.    A method according to Claim 5 wherein the penalty value of a particular server-neighbour cell pair p(S,N) is determined from the equation;

$$p(S,N) = P(N) - R \times \sum_{MR(S)} F(Mr)$$

where P(N) is the paging load of a neighbour cell N,
MR(S) is the set of measurement reports received from the mobile stations served by server cell S, and where F(Mr) = 1 if the strength of a signal received at a mobile station and transmitted by a base station serving cell N is greater than the strength of a signal received by the same mobile station and transmitted by a base station serving cell S (and acting as the serving base Station to said mobile station) and by any other neighbour, otherwise F(Mr) = 0, and R is factor proportional to the ratio of total location update traffic to total cell coverage overlap in the network.

7. A method according to any preceding Claim wherein a maximum paging load value is defined for the common paging area and wherein the assigning step is modified to ensure that the maximum paging load value is not exceeded.

8. Apparatus (13) for grouping cells in a cellular communications network into a common paging area, including;
means (14) for analysing communications traffic within said cells (1, 2, 3, 4),
means (15) for associating, from said analysis, penalty values reflecting the penalty of particular cell pairs (2, 4) being grouped into the same paging area, and
means (16) for assigning cells to common paging areas so as to minimise a sum of the penalty values.

9. Apparatus according to Claim 8 wherein the means (14) for analysing comprises means for measuring a paging signal load in a cell.

10. Apparatus according to Claim 9 wherein the means (14) for analysing further comprises means for determining a degree of coverage overlap between said cell pairs.

11. Apparatus according to Claim 10 wherein the degree of overlap is determined from measurement reports received from mobile stations located within the network.

12. Apparatus according to Claim 11 wherein the measurement reports comprise signal strength measurements of signals received by mobile stations from base stations serving said cells.

13. Apparatus according to Claim 12 wherein the penalty value of a particular server-neighbour cell pair p(S, N) is determined from the equation;

$$p(S,N) = P(N) - R \times \sum_{MR(S)} F(Mr)$$

where P(N) is the paging load of a neighbour cell N,
MR(S) is the set of measurement reports received from the mobile stations served by server cell S, and where F(Mr) = 1 if the strength of a signal received at a mobile station and transmitted by a base station serving cell N is greater than the strength of a signal received by the same mobile station and transmitted by a base station serving cell S (and acting as the serving base station to said mobile station) and by any other neighbour, otherwise F(Mr) = 0, and R is factor proportional to the ratio of total location update traffic to total cell coverage overlap in the network.

14. Apparatus according to any of Claims 8 to 13 wherein a maximum paging load value is defined for the common paging area and wherein the means for assigning is adapted to ensure that the maximum paging load value is not exceeded.

15. A computer program product comprising a medium on or in which is recorded a program which, when executed in a computer system, will perform the method according to any of Claims 1 to 7.

**Patentansprüche**

1. Verfahren eines Gruppierens von Zellen in einem zellularen Kommunikationsnetzwerk zu einem gemeinsamen Rufbereich, wobei das Verfahren die folgenden Schritte umfasst:

Analysieren (14) eines Kommunikationsverkehrs in den Zellen (1, 2, 3, 4),
aus der Analyse, Verknüpfen von Strafwerten (15), die eine Strafe bestimmter Zellenpaare (2, 4) widerspiegeln, die zu dem selben Rufbereich gruppiert werden, und
Zuweisen (16) von Zellen zu gemeinsamen Rufbereichen, um so eine Summe der Strafwerte zu minimieren.

2. Verfahren gemäß Anspruch 1, wobei der Schritt des Analysierens (14) ein Messen einer Rufsignallast in einer Zelle umfasst.

3. Verfahren gemäß Anspruch 2, wobei der Schritt des Analysierens (14) weiterhin ein Bestimmen eines Maßes einer Versorgungsüberlappungen zwischen den Zellenpaaren umfasst.

4. Verfahren gemäß Anspruch 3, wobei das Maß einer Überlappung aus Messberichten bestimmt wird, die von Mobilstationen empfangen werden, die in dem Netzwerk angeordnet sind.

5. Verfahren gemäß Anspruch 4, wobei die Messberichte Signalstärkenmessungen von Signalen umfassen, die durch Mobilstationen von Basisstationen, die die Zellen versorgen, empfangen werden.

6. Verfahren gemäß Anspruch 5, wobei der Strafwert eines bestimmten Server-Nachbarzellenpaares p(S,N) aus der folgenden Gleichung bestimmt wird

$$p(S,N) = P(N) - Rx \sum_{MR(S)} F(Mr)$$

wobei P(N) die Ruflast einer Nachbarzelle N ist,
MR(S) der Satz von Messberichten ist, der von den Mobilstationen empfangen wird, die durch die Serverzelle S versorgt werden, und wobei F(Mr) = 1, wenn die Stärke eines Signals, das bei einer Mobilstation empfangen und durch eine Basisstation, die die Zelle N versorgt, übertragen wird, größer ist als die Stärke eines Signals, das durch die selbe Mobilstation empfangen und durch eine Basisstation, die die Zelle S versorgt (und als die versorgende Basisstation zu der Mobilstation arbeitet) und durch einen beliebigen anderen Nachbarn übertragen wird, andernfalls gilt F(Mr) = 0, und wobei R ein Faktor ist, der proportional zu dem Verhältnis eines gesamten lokalen Updateverkehrs zu einer gesamten Zellenversorgungsüberlappung in dem Netzwerk ist.

7. Verfahren gemäß einem der vorangehenden Ansprüche, wobei ein maximaler Ruflastwert für den gemeinsamen Rufbereich definiert wird und wobei der Zuweisungsschritt modifiziert wird, um sicherzustellen, dass der maximale Ruflastwert nicht überschritten wird.

8. Vorrichtung (13) zum Gruppieren von Zellen in einem zellularen Kommunikationsnetzwerk zu einem gemeinsamen Rufbereich, die umfasst;
Mittel (14) zum Analysieren eines Kommunikationsverkehrs in den Zellen (1, 2, 3, 4),
Mittel (15) zum Verknüpfen, aus der Analyse, von Strafwerten, die eine Strafe bestimmter Zellenpaare (2, 4) widerspiegeln, die zu dem selben Rufbereich gruppiert werden, und
Mittel (16) zum Zuweisen von Zellen zu gemeinsamen Rufbereichen, um so eine Summe der Strafwerte zu minimieren.

9. Vorrichtung gemäß Anspruch 8, wobei das Mittel (14) zum Analysieren Mittel zum Messen einer Rufsignallast in einer Zelle umfasst.

10. Vorrichtung gemäß Anspruch 9, wobei das Mittel (14) zum Analysieren weiterhin Mittel zum Bestimmen eines Maßes einer Versorgungsüberlappung zwischen den Zellenpaaren umfasst.

11. Vorrichtung gemäß Anspruch 10, wobei das Maß einer Überlappung aus Messberichten bestimmt wird, die von Mobilstationen empfangen werden, die in dem Netzwerk angeordnet sind.

12. Vorrichtung gemäß Anspruch 11, wobei die Messberichte Signalstärkenmessungen von Signalen umfassen, die durch Mobilstationen von Basisstationen, die die Zellen versorgen, empfangen werden.

13. Vorrichtung gemäß Anspruch 12, wobei der Strafwert eines bestimmten Server-Naahbarzellenpaares p(S,N) aus der folgenden Gleichung bestimmt wird

$$p(S,N) = P(N) - Rx \sum_{MR(S)} F(Mr)$$

wobei P(N) die Ruflast einer Nachbarzelle N ist,
MR(S) der Satz von Messberichten ist, der von den Mobilstationen empfangen wird, die durch die Serverzelle S versorgt werden, und wobei F(Mr) = 1, wenn die Stärke eines Signals, das bei einer Mobilstation empfangen und durch eine Basisstation, die die Zelle N versorgt, übertragen wird, größer ist als die Stärke eines Signals, das durch die selbe Mobilstation empfangen und durch eine Basisstation, die die Zelle S versorgt (und als die versorgende Basisstation zu der Mobilstation arbeitet) und durch einen beliebigen anderen Nachbarn übertragen wird, andernfalls gilt F(Mr) = 0, und wobei R ein Faktor ist, der proportional zu dem Verhältnis eines gesamten lokalen Updateverkehrs zu einer gesamten Zellenversorgungsüberlappung in dem Netzwerk ist.

14. Vorrichtung gemäß einem der Ansprüche 8 bis 13, wobei ein maximaler Ruflastwert für den gemeinsamen Rufbereich definiert wird und wobei das Mittel zum Zuweisen adaptiert ist, um sicherzustellen, dass der maximale Ruflastwert nicht überschritten wird.

15. Computerprogrammprodukt, das ein Medium umfasst, auf oder in dem ein Programm aufgezeichnet wird, das, wenn es in einem Computersystem ausgeführt wird, das Verfahren gemäß einem der Ansprüche 1 bis 7 durchführt.

**Revendications**

1. Procédé pour le regroupement de cellules d'un réseau de communication cellulaire en une zone de recherche de personne ("*paging*") commune, comprenant les étapes consistant à :

   analyser (14) le trafic de communication à l'intérieur desdites cellules (1, 2, 3, 4),
   à partir de ladite analyse, associer des valeurs de pénalité (15) reflétant la pénalité de paires de cellules particulières (2, 4) regroupées dans la même zone de recherche de personne, et
   attribuer (16) des cellules à des zones de recherche de personne communes de façon à minimiser une somme des valeurs de pénalité.

2. Procédé selon la revendication 1, dans lequel l'étape d'analyse (14) comprend la mesure d'une charge de signaux de recherche de personne dans une cellule.

3. Procédé selon la revendication 2, dans lequel l'étape d'analyse (14) comprend en outre la détermination d'un degré de chevauchement de couverture entre lesdites paires de cellules.

4. Procédé selon la revendication 3, dans lequel le degré de chevauchement est déterminé à partir de rapports de mesure reçus en provenance de stations mobiles se trouvant dans le réseau.

5. Procédé selon la revendication 4, dans lequel les rapports de mesure comprennent des mesures d'intensité de signal concernant des signaux reçus par des stations mobiles en provenance de stations de base desservant lesdites cellules.

6. Procédé selon la revendication 5, dans lequel la valeur de pénalité d'une paire cellule de desserte/cellule voisine particulière p(S,N) est déterminée à l'aide de l'équation :

$$p(S,N) = P(N) - R \times \sum_{MR(S)} F(Mr)$$

où P(N) est la charge de recherche de personne d'une cellule voisine N, MR(S) est l'ensemble des rapports de mesure reçus des stations mobiles desservies par la cellule de desserte S, et F(Mr) = 1 si l'intensité d'un signal reçu par une station mobile et émis par une station de base desservant la cellule N est supérieure à l'intensité d'un signal reçu par la même station mobile et émis par une station de base desservant la cellule S (et jouant le rôle de station de base de desserte pour ladite station mobile) et par toute autre voisine, sinon F(Mr) = 0, et R est un facteur proportionnel au rapport du trafic de mise à jour de localisation total sur le chevauchement de couverture de cellule total sur le réseau.

7. Procédé selon l'une quelconque des revendications précédentes, dans lequel une valeur maximale de charge de recherche de personne est définie pour la zone de recherche de personne commune, et dans lequel l'étape d'attribution est modifiée de façon à garantir que la valeur maximale de charge de recherche de personne ne soit pas dépassée.

**8.** Appareil (13) pour le regroupement de cellules d'un réseau de communication cellulaire en une zone de recherche de personne ("*paging*") commune, comprenant :

des moyens (14) pour analyser le trafic de communication à l'intérieur desdites cellules (1, 2, 3, 4),
des moyens (15) pour associer, à partir de ladite analyse, des valeurs de pénalité reflétant la pénalité de paires de cellules particulières (2, 4) regroupées dans la même zone de recherche de personne, et
des moyens (16) pour attribuer des cellule à des zones de recherche de personne communes de façon à minimiser une somme des valeurs de pénalité.

**9.** Appareil selon la revendication 8, dans lequel les moyens d'analyse (14) comprennent des moyens pour mesurer une charge de signaux de recherche de personne dans une cellule.

**10.** Appareil selon la revendication 9, dans lequel les moyens d'analyse (14) comprennent en outre des moyens pour déterminer un degré de chevauchement de couverture entre lesdites paires de cellules.

**11.** Appareil selon la revendication 10, dans lequel le degré de chevauchement est déterminé à partir de rapports de mesure reçus en provenance de stations mobiles se trouvant dans le réseau.

**12.** Appareil selon la revendication 11, dans lequel les rapports de mesure comprennent des mesures d'intensité de signal concernant des signaux reçus par des stations mobiles en provenance de stations de base desservant lesdites cellules.

**13.** Appareil selon la revendication 12, dans lequel la valeur de pénalité d'une paire cellule de desserte/cellule voisine particulière p(S,N) est déterminée à l'aide de l'équation :

$$p(S,N) = P(N) - R \times \sum_{MR(S)} F(Mr)$$

où P(N) est la charge de recherche de personne d'une cellule voisine N, MR(S) est l'ensemble des rapports de mesure reçus des stations mobiles desservies par la cellule de desserte S, et F(Mr) = 1 si l'intensité d'un signal reçu par une station mobile et émis par une station de base desservant la cellule N est supérieure à l'intensité d'un signal reçu par la même station mobile et émis par une station de base desservant la cellule S (et jouant le rôle de station de base de desserte pour ladite station mobile) et par toute autre voisine, sinon F(Mr) = 0, et R est un facteur proportionnel au rapport du trafic de mise à jour de localisation total sur le chevauchement de couverture de cellule total sur le réseau.

**14.** Appareil selon l'une quelconque des revendications 8 à 13, dans lequel une valeur maximale de charge de recherche de personne est définie pour la zone de recherche de personne commune, et dans lequel les moyens d'attribution sont adaptés pour garantir que la valeur maximale de charge de recherche de personne ne soit pas dépassée.

**15.** Produit de programme informatique comprenant un support sur ou dans lequel est enregistré un programme qui, lorsqu'il est exécuté sur un système informatique, exécute le procédé selon l'une quelconque des revendications 1 à 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6138025 A
- GB 2356320 A